# EUROPÄISCHE PATENTANMELDUNG

(11) **EP 4 400 859 A1**
(43) Veröffentlichungstag der Anmeldung: **17.07.2024**
(21) Anmeldenummer: 23197350.4
(22) Anmeldetag: 14.09.2023
(51) Int. Cl.: G01S 7/00, G01S 5/02, G01S 5/14, G01S 13/02, G01S 13/10, G01S 13/76, G01S 13/87, G01S 13/88, G01S 13/931

(54) **STEUERSYSTEM SOWIE FAHRZEUGFUNKTIONSFREIGABESYSTEM**

(30) Priorität: 16.01.2023 DE 102023100880
(71) Anmelder: Huf Hülsbeck & Fürst GmbH & Co. KG, 42551 Velbert (DE)
(72) Erfinder: Peschl, Andreas, 42555 Velbert (DE); Maschlanka, Matthias, 46485 Wesel (DE); Heinemann, Ferdinand, 40822 Mettmann (DE); Döring, Tobias, 42579 Heiligenhaus (DE)
(74) Vertreter: Zenz Patentanwälte Partnerschaft mbB

(57) **Zusammenfassung**

Die Erfindung betrifft ein Steuersystem (2) zum Auslösen einer Funktion einer Fahrzeugkomponente (4) eines Kraftfahrzeugs (3). Das Steuersystem weist ein Ortungssystem (5) auf. Das Ortungssystem (5) dient einem Orten eines Bedieners, der einen ID-Geber (9) mit sich führt. Der ID-Geber (9) kommuniziert mit dem Fahrzeug beispielsweise über eine Kommunikationsanordnung (10), und tauscht dabei UWB-Signale (100a, 100b, 100c) und UWB-Antwortsignale (200a, 200b, 200c) aus. Der ID-Geber kann ausßerdem einen Bewegungssensor (11) und einen Mikrocontroller (12) aufweisen.

Das Ortungssystem (5) weist mehrere Funkverbindungseinheiten (6a, 6b, 6c) und eine oder mehrere Radareinheiten (7a, 7b, 7c) auf, außerdem eine zentrale Steuereinheit (8).

Optional können mit den Radareinheiten (7a, 7b, 7c) gewonnene Positionsinformationen genutzt werden, um mit den Funkverbindungseinheiten (6a, 6b, 6c) gewonnene Positionsinformationen zu plausibilisieren.

Die Erfindung betrifft ferner ein Fahrzeugfunktionsfreigabesystem (1).

## Beschreibung

Die Erfindung betrifft ein Steuersystem für das Auslösen einer Funktion einer Fahrzeugkomponente eines Kraftfahrzeugs mit einem Ortungssystem zum Orten eines Bedieners, der einen ID-Geber mit sich führt. Die Erfindung betrifft zudem ein Fahrzeugfunktionsfreigabesystem, das unter anderem ein Steuersystem aufweist.

In der Fahrzeugtechnik haben sich Zutritts- oder Authentifizierungssysteme etabliert, die auf dem Prinzip basieren, dass ein Bediener einen ID-Geber mit sich führt, der die Authentifizierung des Benutzers in Kommunikation mit dem Kraftfahrzeug gewährleistet. Viele dieser Systeme beruhen auf dem Prinzip, dass eine Funkkommunikation zwischen einem Steuersystem des Fahrzeugs und einem ID-Geber ohne Zutun des Bedieners initiiert wird. Basierend auf der Funkkommunikation wird der ID-Geber am Steuersystem authentifiziert, und durch das Steuersystem die Funktion einer Fahrzeugkomponente ausgelöst. Die Funktion einer Fahrzeugkomponente kann beispielsweise die Gewährung des Zutritts zu einer oder mehrerer Türen oder Klappen oder die Freigabe der Motorzündung sein.

Um die Sicherheit dieser Systeme, beispielsweise vor sogenannten Relay-Station-Attacken, zu gewährleisten, aber auch, um Funktionen an bestimmte Szenarien anpassen zu können, hat sich zudem bewährt, Steuersysteme für das Auslösen der Funktion mit Ortungssystemen auszustatten. Beispielsweise kann vorgesehen sein, eine Auslösung einer Funktion davon abhängig zu machen, ob ein Bediener sich innerhalb eines bestimmten Umkreises um das Kraftfahrzeug befindet. Eine weitere Möglichkeit ist, dass bestimmte Funktionen nur dann ausgelöst werden, wenn mit einem Ortungssystem festgestellt wird, dass der Bediener, der einen ID-Geber mit sich führt, sich an einer Position befindet, an welcher diese Funktion auch zweckmäßig ist; beispielsweise kann die Freigabe einer Fahrertür davon abhängig gemacht werden, dass der Bediener sich vor der Fahrertür befindet.

Bei Ortungssystemen der beschriebenen Art kann auf verschiedene Methoden der Positionsermittlung zurückgegriffen werden, die je nach Funktionsweise verschiedene Vor- und Nachteile mit Hinblick auf Positionsgenauigkeit, Zuverlässigkeit der Erkennung oder Energieumsatzbedarf charakterisiert sind.

Wünschenswert ist, ein Steuersystem der oben beschriebenen Art bereit zu stellen, welches ein Ortungssystem aufweist, das sowohl mit einer hohen Zuverlässigkeit der Erkennung als auch mit einer hohen Genauigkeit der Erkennung arbeitsfähig ist.

Die Aufgabe wird mit einem Steuersystem zum Auslösen einer Funktion einer Fahrzeugkomponente mit den Merkmalen des Anspruchs 1, mit einem Steuersystem zum Auslösen einer Funktion einer Fahrzeugkomponente mit den Merkmalen des Anspruchs 8 sowie mit einem Fahrzeugfunktionsfreigabesystem mit den Merkmalen des Anspruchs 20 gelöst.

Das erfindungsgemäße Steuersystem dient dem Auslösen einer Funktion einer Fahrzeugkomponente eines Fahrzeugs. Beispielsweise kann es sich bei der Fahrzeugkomponente um eine Tür oder Klappe handeln und bei dem Auslösen der Funktion um das Öffnen der Tür oder Klappe. Ein anderes Beispiel für die Fahrzeugkomponente ist der Motorstarter des Kraftfahrzeugs, wobei die Funktion des Startens des Motors ausgelöst werden kann.

Das Steuersystem weist ein Ortungssystem zum Orten eines Bedieners auf, der einen dem Steuersystem bekannten und zur Funkkommunikation mit dem Steuersystem vorbereiteten ID-Geber mit sich führt. An dem Kraftfahrzeug sind also elektronische Komponenten angeordnet, die in Lage sind, Ortsinformationen zu ermitteln, die mit der Position des Bedieners im Zusammenhang stehen, wobei es sich beispielsweise um Koordinaten, um die Information über das Vorhandensein innerhalb eines gewissen Umkreises, oder um ähnliche Informationen handeln kann. Das Ortungssystem gewinnt diese Information, um sie dem Steuersystem bereitstellen zu können, so dass das Steuersystem das Auslösen der Funktion anhand dieser Information vornehmen kann. Beispielsweise kann das Steuersystem die Freigabe einer Funktion von der Voraussetzung abhängig machen, dass bestimmte Ortsparameter des Bedieners zutreffend sind, beispielsweise der Bediener sich innerhalb eines gewissen Umkreises um das Kraftfahrzeug befindet oder der Bediener sich innerhalb eines bestimmten Bereichs, der beispielsweise durch Koordinaten im dreidimensionalen Raum bestimmt ist, um das Kraftfahrzeug herum befindet.

Das Ortungssystem weist erfindungsgemäß sowohl mehrere Funkverbindungseinheiten auf als auch mehrere Radareinheiten auf.

Die Funkverbindungseinheiten sind Einrichtungen, die an dem Kraftfahrzeug angeordnet sind, und die in der Lage sind, mittels Funks eine Verbindung mit entsprechenden Gegengeräten durchzuführen. Die Funkverbindungseinheiten des Ortungssystems dienen dem Zweck, mit dem ID-Geber, welcher den Bediener zum Mitführen bereitgestellt wird, eine Funkkommunikation aufzubauen und durchzuführen. Der ID-Geber ist hierzu mit den erforderlichen Mitteln für diese Funkkommunikation eingerichtet. Bei dem ID-Geber kann es sich beispielsweise um einen Funkschlüssel ohne oder mit mechanischem Schlüsselbart handeln, aber auch andere Ausführungen eines ID-Gebers sind möglich, wie beispielsweise eine Ausführung des ID-Gebers als Smartphone oder Smartwatch oder Smart Ring.

Das Ortungssystem weist mehrere dieser Funkverbindungseinheiten auf, wobei die Funkverbindungseinheiten insbesondere beabstandet an dem Fahrzeug angeordnet sind, um anhand verschiedener, an verschiedenen Positionen erhaltener, Funkdaten eine Information ableiten zu können, in welchem Raumbereich der Bediener sich befindet.

Weiterhin weist das Ortungssystem eine oder mehrere Radareinheiten auf, die insbesondere ebenfalls beabstandet an dem Fahrzeug voneinander angeordnet sind. Die Radareinheiten dienen ebenfalls der Befähigung des Ortungssystems, eine Information über den räumlichen Bereich zu gewinnen, in welchem der Bediener sich befindet.

Die Funkverbindungseinheiten und die Radareinheiten des Ortungssystems sind mit einer selben zentralen Steuereinheit verbunden, die zweckmäßiger Weise ebenfalls an oder in dem Kraftfahrzeug vorhanden ist und Bestandteil des Steuersystems ist. Beispielsweise kann eine gesonderte zentrale Steuereinheit des Ortungssystems in dem Kraftfahrzeug angeordnet sein, die zentrale Steuereinheit kann aber auch beispielsweise als Bestandteil des zentralen Steuergeräts des Kraftfahrzeugs, also nicht als Bestandteil des Ortungssystems, umgesetzt sein.

Die zentrale Steuereinheit ist eingerichtet, aus Signalinformationen von Funksignalen, welche die Funkverbindungseinheiten von dem ID-Geber empfangen, erste Positionsinformationen herzuleiten, sowie aus Radarantworten, welche eine oder mehrere oder alle der Radareinheiten empfangen, zweite Positionsinformationen herzuleiten.

Die vorstehend beschriebene Entwicklung weist also als wesentliches Element Ortungssysteme auf, die auf unterschiedliche Weise Informationen über die Position eines Bedieners gewinnen.

Zum einen sind Funkverbindungseinheiten an dem Kraftfahrzeug angeordnet, die in Kommunikation insbesondere mit einem ID-Geber des Bedieners Funksignale empfangen können und aus den empfangenen Funksignalen eine Information über die Position des Bedieners erhalten. Beispielsweise kann das Ortungssystem wenigstens drei derartige Funkverbindungseinheiten aufweisen und an dem Empfangsort jeder der Funkverbindungseinheit, das heißt: für jede Funkverbindungseinheit an der Position der Antenne der entsprechenden Funkverbindungseinheit, empfangener Funksignale eine Information darüber ableiten, wo der Bediener sich befindet. Beispielsweise kann vorgesehen sein, dass an jeder vorhandenen Antennen der, bevorzugt drei, Funkverbindungseinheiten eine Empfangssignalstärke ermittelt wird, und dass seitens der zentralen Steuereinheit basierend auf den Empfangssignalstärken eine Trilateration durchgeführt wird zu Abschätzung, wo der Bediener sich befindet, indem - entsprechend der Genauigkeit der Trilateration unter gegebenen Umständen - ein Bereich ermittelt wird, in welchem der Bediener als vorhanden angesehen wird. Die Funkverbindungseinheiten können in einem Beispiel beispielsweise Bluetooth-Funkeinheiten sein.

Zusätzlich zu den Funksignalen, die mit den Funkverbindungseinheiten empfangen werden, können von den Radareinheiten Radarantworten erhalten werden. Diese Radarantworten befähigen die zentrale Steuereinheit, eine Information über die Position des Bedieners zu ermitteln. Beispielsweise kann auf Basis von Empfangssignalstärken mehrerer Radarantworten eine Lateration durchgeführt werden, beispielsweise aus drei Radarsignalantworten eine Trilateration, alternativ kann auch vorgesehen sein, dass, beispielsweise in einem Fall, in dem nur eine einzige der vorhandenen Radareinheiten überhaupt eine Radarantwort erhält, darauf geschlossen wird, in welcher Raumrichtung ein Gegenstand oder eine Person sich befindet. Anders als es bei den Funkverbindungseinheiten der Fall ist, sind die Radareinheiten ohne weitere Informationen nicht in der Lage, eine Person von anderen Personen zu unterscheiden; gleichwohl kann die Radarinformation genutzt werden, festzustellen, ob diese in Konsistenz oder im Widerspruch mit den Informationen steht, die auf Basis der Funksignale gewonnen werden, so dass in der Gesamtheit sich ergänzende Informationen eine Gesamtinformation bilden.

Die Kombination aus Funkverbindungseinheiten und Radareinheiten entfaltet ihren besonderen Vorteil aus der Tatsache, dass die Art der Gewinnung der Signale bei beiden unterschiedlich ist

Funksignale stellen eine Kommunikation zwischen der entsprechenden Funkverbindungseinheit am Fahrzeug und einem geeigneten Gegengerät dar, wobei insbesondere ein ID-Geber des Bedieners als Gegengerät vorgesehen sein soll. Die Nutzung von Radar ermöglicht ergänzend dazu die Gewinnung von Informationen insbesondere auch dann, wenn keine Funkkommunikation durchgeführt wird. Die Nutzung von Radar ist daher insbesondere dann von Vorteil, wenn ein Aufbau einer Funkverbindung mit dem Gegengerät, beispielsweise einem ID-Geber, noch nicht gelungen ist oder wenn der Aufbau der Funkverbindung mit dem Gegengerät aus irgendwelchen Gründen unterbunden oder gestört wird.

Funkverbindungseinheiten sind für die Kommunikation, auch beispielsweise im Bereich der Automobiltechnologie, seit langem bekannt und auch aus diesem Grund kostengünstig verfügbar. Beispielsweise werden im Bereich der Automobiltechnologie LF-Sender, HF-Sender und -Empfänger andere Arten von Funkverbindungseinheiten standardmäßig verwendet und sind entsprechend kommerziell verfügbar, insbesondere beispielsweise zur Kommunikation mit einem Bluetooth-Standard, insbesondere auch mit Bluetooth-Low-Energie-Standard. Eine weitere, mittlerweile ebenfalls sehr wichtige Gattung der Funkverbindungseinheiten sind die sogenannten Ultra-Wide-Band-Funkverbindungseinheiten, abgekürzt: UWB-Funkverbindungseinheiten, die insbesondere als UWB-Transceiver kommerziell hoch verfügbar sind.

Das Anordnen von Radareinheiten an Kraftfahrzeugen zur Nutzung der Radartechnologie im Kraftfahrzeugbereich gewinnt zunehmend an Bedeutung. Die Radartechnologie ist seit dem frühen 20. Jahrhundert bekannt. Sie beruht auf dem Prinzip, elektromagnetische Wellen auszusenden, das Echo der ausgesendeten elektromagnetischen Wellen zu empfangen, und das empfangene Signal bedarfsweise nach verschiedenen Kriterien auszuwerten. Je nach bedarfsweiser konkreter Umsetzung können verschiedene Informationen über die Objekte gewonnen werden, welche für das Zurückwerfen des Echos ursächlich sind. Beispielsweise kann mit der Radartechnologie eine Ortung erfolgen. Weiter können Informationen über die Relativbewegung zwischen Sender und Objekt, über die absolute Geschwindigkeit eines der beiden, oder, je nach Ausführung, über Konturen des Objekts gewonnen werden.

Die zunehmende Nutzung von Radar in der Automobiltechnologie beruht unter anderem auf dem seit einiger Zeit vorhandenen Wunsch, die Autonomie von Fahrzeugen zu erhöhen, wodurch die Weiterentwicklung der in Fahrzeugen genutzten Sensoren getrieben wurde.

Inzwischen werden Radareinheiten zur Ausrüstung beispielsweise von Kraftfahrzeugen als zum Einbau bereite Zukaufsysteme angeboten, die ein hohes Maß an Reichweite sowie lateraler Auflösung in der Objekterkennung bereitstellen.

Die Nutzung von Radarsensoren hat den Vorteil, dass aufgrund des grundsätzlichen Funktionsprinzips, elektromagnetische Wellen zur Informationsgewinnung zu nutzen, Informationen erhalten werden können, die über die Ergebnisse hinaus gehen, die mit anderen Sensorarten - beispielsweise mit Ultraschallsensoren - gewonnen werden können; gegenüber der Nutzung in mancherlei Hinsicht ähnlicher Systeme, wie beispielsweise LIDAR-Systemen, haben Radarsensoren wiederum den Vorteil, dass ihre Beschaffung mit im Vergleich geringeren Kosten einhergeht.

Besonders bevorzugt sind die Funkverbindungseinheiten als UWB-Funkanordnungen ausgebildet und die UWB-Funkanordnungen mit einer UWB-Ranging-Funktionalität ausgestattet.

Prinzipiell ist die Verwendung von Ultra-Wide-Band-Funksignalen, kurz: UWB-Funksignalen, für verschiedene Anwendungen aus der Praxis. Für die Benutzung in Produkten für den Endanwender stehen jedoch erst seit relativ kurzer Zeit kommerziell verfügbare UWB-Funkanordnungen zur Verfügung, die beispielsweise als UWB-Transceiver ausgebildet sind. Während die Grundlagen der Ultrabreitbandtechnologie und das Funktionsprinzip bereits seit langem bekannt sind, ist erst in jüngerer Vergangenheit die Benutzung außerhalb von Spezialanwendungen in großem Umfang zugänglich geworden, nicht zuletzt aufgrund liberalerer Regulierung.

Die Ultrabreitbandtechnologie ist eine Nahbereichsfunkkommunikation, die auf dem Aussenden kurzer Signalpulse basiert. Die Signalpulse decken innerhalb einer großen Frequenzbandbreite eine Vielzahl von Frequenzen ab. Die Breite der abgedeckten Frequenzbereiche ist insbesondere von regulatorischen Vorgaben eines entsprechenden territorialen Gebiets abhängig. Die Informationsübertragung beruht bei UWB, anders als bei den meisten gängigen Funkkommunikationsverfahren, nicht auf einer Trägerfrequenzmodulation, sondern auf anderen Methoden der Modulation, wie beispielsweise On-off-Keying, Pulsamplitudenmodulation oder Pulspositionsmodulation.

Die UWB-Kommunikation weist den prinzipiellen Vorteil auf, dass aufgrund der Aussendung von Pulsen eine Entfernungsbestimmung mittels eines laufzeitbasierten Ansatzes möglich ist. Aufgrund derartiger Ansätze wird auch oft auch mit der Bezeichnung der Time-Of-Flight-Methoden Bezug genommen. Beispielsweise kann die Entfernung zwischen einer UWB-Antenne und einem für UWB-Kommunikation vorbereitetem portablen ID-Geber mit vergleichsweiser hoher Genauigkeit ermittelt werden. Dies kann beispielsweise erreicht werden, indem ein UWB-Signal von der UWB-Antenne zu dem portablen ID-Geber gesendet wird, ein UWB-Transceiver des portablen ID-Gebers dieses beantwortet, und eine mit der UWB-Antenne der UWB-Funkanordnungen am Kraftfahrzeug gekoppelte zentrale Steuereinheit das erfasste Antwortsignal auswertet. Erfahrungsgemäß kann bei guten Bedingungen eine Genauigkeit der Entfernungsbestimmung in der Größenordnung von wenigen Zentimetern bis zu wenigen zehn Zentimetern erreicht werden. Die beschriebene Vorgehensweise der Kommunikation auf UWB-Basis und einer Entfernungsermittlung auf Basis von Time-Of-Flight-Berechnung ist als bereits in UWB-Funkanordnungen implementierte Eigenschaft verfügbar und dort als UWB-Ranging-Funktionalität referenziert.

Ein Steuersystem, das wie beschrieben in einer Weiterbildung als UWB-Funkanordnungen ausgebildete Funkverbindungseinheiten sowie die erfindungsgemäß vorhandenen Radareinheiten aufweist, hat den Vorteil, besonders robust in der Verfügbarkeit einer Positionsinformation zu einem Bediener zu haben.

Bei den vielen, insbesondere den oben genannten, Vorteilen der UWB-Kommunikation muss allerdings der prinzipbedingt nicht vollständig vermeidbare Nachteil der UWB-Kommunikation in Kauf genommen werden, dass aufgrund der physikalischen Eigenschaften der UWB-Funksignale und der konkreten Umsetzung dieser UWB-Kommunikation eine Sichtlinie zwischen Sender und Empfänger vorhanden sein muss. Es hat sich aber gezeigt, dass in manchen praxisrelevanten Situationen eine erhöhte Neigung besteht, dass diese Sichtlinie gestört oder unterbrochen wird. Die wird beispielsweise manchmal in Fällen beobachtet, in denen ein zur UWB-Kommunikation mit dem Fahrzeug vorbereiteter ID-Geber vorhanden ist, und der Bediener, der diesen ID-Geber in Besitz hat, sich dem Fahrzeug auf eine vergleichsweise geringere Distanz hin genähert hat. Beispielsweise kann dies darin begründet sein, dass der Bediener den ID-Geber in einer Gesäßtasche seiner Hose platziert und infolgedessen die Sichtachse, gelegentlich auch als Line-Of-Sight bezeichnet, zwischen dem ID-Geber und den Funkverbindungseinheiten des Kraftfahrzeugs abgeschattet ist. Der Vorteil eines erfindungsgemäßen Steuersystems entfaltet sich in einer derartigen Situation in besonderer Weise, da aufgrund der am Fahrzeug angeordneten Radareinheiten weiterhin Informationen über die Position des Bedieners gewonnen werden können. Denn auch bei unterbrochener Sichtlinie sind die erfindungsgemäß am Kraftfahrzeug vorhandenen Radareinheiten in der Lage, Radarinformationen zu gewinnen, und zwar auch dann, wenn keine Kommunikation einer kraftfahrzeugseitigen Funkverbindungseinheit mit dem ID-Geber möglich ist. Dieses Zusammenspiel aus Informationen, gewonnen mit den UWB-Funkanordnungen und gewonnen mit den Radareinheiten, ist ein besonderer Vorteil, der sich aus der beschriebenen Weiterbildung des erfindungsgemäßen Steuersystems ergibt, und der in besonders vorteilhafter Weise eine hohe Verfügbarkeit von Positionsinformationen über den Aufenthaltsort des Bedieners bereitstellen kann.

Es ist alternativ aber auch denkbar dass die Funkverbindungseinheiten als Bluetooth-Funkanordnungen ausgebildet sind, insbesondere als Bluetooth-Funkanordnungen mit einer BLE-Funktionalität.

Bevorzugt weist das Ortungssystem wenigstens drei UWB-Funkanordnungen auf, und die zentrale Steuereinheit ist eingerichtet, das Herleiten der ersten Positionsinformationen mittels Trilateration und/oder Triangulation mit Laufzeitinformationen der UWB-Funksignale durchzuführen, die für jede der UWB-Funkanordnungen zwischen der UWB-Funkanordnung und dem ID-Geber gesendet werden.

Es ist aber auch denkbar, dass das Ortungssystem wenigstens eine UWB-Funkanordnung aufweist, und die Steuereinheit eingerichtet ist, das Herleiten der ersten Positionsinformationen zumindest als Signallaufzeit-basiertes Erfassen einer Abstandsinformation mit Laufzeitinformationen von UWB-Funksignalen durchzuführen, die für jede der UWB-Funkanordnungen zwischen der UWB-Funkanordnung und dem ID-Geber gesendet werden.

Wenn in einer alternativen Ausführung die Funkanordnungen als Bluetooth-Funkanordnungen ausgebildet sind, kann das Ortungssystem alternativ mit diesen in analoger Weise ausgeführt sein. Dies wird dadurch ermöglicht, dass Laufzeitinformationen auch im Rahmen einer Bluetooth-Kommunikation erfasst werden können. Deren Genauigkeit ist zwar oft geringer als diejenige von UWB-basierten Laufzeitinformationen, ist aber angesichts der je nach Konstellation günstigeren Beschaffung eines Bluetooth-Chips unter Umständen ebenso erwägenswert.

Besonders bevorzugt werden die Radareinheiten als UWB-Radarsensoren ausgebildet, die zum Senden von UWB-Radarsignalen und zum Empfangen der Radarantworten ausgebildet sind.

Die Steuereinheit ist in bevorzugter Weiterbildung eingerichtet, das Herleiten der zweiten Positionsinformationen mittels Trilateration und/oder Triangulation mit Radarantworten durchzuführen, die jede der bevorzugt als UWB-Radaranordnungen ausgebildeten Radareinheiten erhält. Besonders bevorzugt handelt es sich bei den Radarantworten um eine Laufzeitinformation der Radarantworten.

In besonders bevorzugter Ausgestaltung sind die Funkverbindungseinheiten als UWB-Funkanordnungen ausgebildet, die mit einer UWB-Ranging-Funktionalität ausgestattet sind, und sind die Radareinheiten als UWB-Radarsensoren ausgebildet, die zum Senden von UWB-Radarsignalen und zum Empfangen der Radarantworten ausgebildet sind, wobei jeweils eine UWB-Funkanordnung und ein UWB-Radarsensor auf einem gemeinsamen Chip angeordnet sind. Einheiten aus UWB-Funkanordnung und UWB-Radarsensor auf einem gemeinsamen Chip haben unter anderem den Vorteil, dass diese kommerziell verfügbar sind. Vor diesem Hintergrund ist es in vergleichsweise einfacher Weise möglich, jeweils Informationen, gewonnen mit der UWB-Funkeinheit und Informationen, gewonnen mit dem Radarsensor, in sich ergänzender Weise oder - wenn erforderlich - sich ersetzender Weise miteinander auszuwerten. Darüber hinaus hat das Bereitstellen der beiden Sensorarten auf einem gemeinsamen Chip den Vorteil, dass sie in besonders platzsparender Weise an einem Kraftfahrzeug angeordnet werden können. Auch die Verbindung sämtlicher der Funkverbindungseinheiten und Radarsensoren mit derselben zentralen Steuereinheit ist aufgrund der Bereitstellung auf einem gemeinsamen Chip gegenüber einer Bereitstellung in separater Weise erleichtert.

In dem Steuersystem ist bevorzugt jeweils eine Funkverbindungseinheit eineindeutig einer Radareinheit zu einem Detektionspaar zugeordnet, das heißt: jede gegebene Funkverbindungseinheit ist eindeutig einer Radareinheit zugeordnet und jede gegebene Radareinheit ist eindeutig einer Funkverbindungseinheit zugeordnet und die Zuordnung zwischen Funkverbindungseinheit und Radareinheit ist, mathematisch gesprochen, eine bijektive Zuordnung.

Die zentrale Steuereinheit ist weiterhin eingerichtet, die Radareinheit eines gegebenen Detektionspaars für das Senden von Radarsignalen, beispielsweise UWB-Radarsignalen, und das Empfangen der entsprechenden Radarantwort einzuschalten, nachdem ein mit der Funkverbindungseinheit desselben Detektionspaars gewonnener Abstandswert einen festgelegten Abstandsgrenzwert unterschritten hat.

Alternativ kann die Umsetzung derart erfolgen, dass eine mit der Radareinheit und der Funkverbindungseinheit desselben Detektionspaars gekoppelte Steueranordnung eingerichtet ist, die Radareinheit eines Detektionspaares für das Senden von Radarsignalen und das Empfangen der jeweiligen Radarantwort einzuschalten, nachdem ein mit der Funkverbindung desselben Detektionspaars gewonnener Abstandswert ein festgelegten Abstandsgrenzwert unterschritten hat.

Der Begriff des Abstandswerts ist dahingehend zu verstehen, dass es sich um einen Wert handelt, der mit der Funkverbindungseinheit in Kommunikation mit einem Gegengerät, beispielsweise mit einem zur Funkkommunikation eingerichteten ID-Geber, erhalten worden ist, der einen Rückschluss auf den Abstand des ID-Gebers von der Funkverbindungseinheit zulässt. Es muss sich dabei nicht unbedingt um einen Abstand handeln, sondern es kann sich auch um eine Empfangssignalstärke oder um einen Laufzeitwert handeln. Beispielsweise kann es sich bei dem Abstandswert um einen RSSI-Wert eines Bluetooth-Signals handeln, das von dem ID-Geber ausgesandt und der Funkverbindungseinheit empfangen worden ist, wobei die Radareinheit eines gegebenen Detektionspaars für das Senden von Radarsignalen, beispielsweise UWB-Radarsignalen, und das Empfangen der entsprechenden Radarantwort eingeschaltet wird, nachdem der mit der Funkverbindungseinheit desselben Detektionspaars gewonnene, als RSSI-Wert ausgebildete, Abstandswert einen festgelegten, ebenfalls als RSSI-Wert ausgebildeten, Abstandsgrenzwert unterschritten hat.

Dieser Abstandswert wird von der zentralen Steuereinheit beziehungsweise von einer mit der Radareinheit und der Funkverbindungseinheit desselben Detektionspaars gekoppelten Steueranordnung einem Vergleich mit einem festgelegten Abstandsgrenzwert unterzogen, wobei in einem Fall, in welchem der Abstandswert den festgelegten Abstandsgrenzwert unterschritten hat, der Radarsensor für das Senden und Empfangen von Radarsignalen eingeschaltet wird. Das Unterschreiten des Abstandsgrenzwerts mit dem Abstandwert ist also eine notwendige, in spezieller Weiterbildung auch hinreichende, Voraussetzung dafür, dass die Radareinheit zur Sende- und Empfangsbereitschaft eingeschaltet wird. Je nach bevorzugter Ausgestaltung kann vorgesehen sein, dass für das hinreichende Erfüllen von Bedingungen zum Einschalten der Radareinheit weitere Erfordernisse erfüllt sein müssen, beispielsweise das Unterschreiten des Abstandsgrenzwerts mit dem Abstandswert für einen festgelegten Mindestzeitraum, beispielsweise von einem Mindestzeitraum zwischen 10 und 100 Millisekunden, und/oder das Unterschreiten mit einem Mindestabstand unterhalb des Abstandsgrenzwerts, beispielsweise für das Erreichen von einem Wert von beispielsweise wenigstens 10 Prozent unterhalb des Abstandsgrenzwerts.

Mit der zuvor beschriebenen Überlegung, dass das Senden von Radarsignalen erst dann vorgenommen wird, wenn bereits das Annähern des Bedieners, über den Umweg der Kommunikation mit dem ID-Geber des Bedieners, als bis zu einem gewissen Punkt erkannt angenommen worden ist, geht mit mehreren Vorteilen einher. Zum einen hat bereits eine Kommunikation mit dem ID-Geber stattgefunden; je nach Ausgestaltung kann zu diesem Zeitpunkt bereits - und dies ist bevorzugt - die kraftfahrzeugseitige Authentifizierung des ID-Gebers durchgeführt worden sein, so dass der zentralen Steuereinheit am Kraftfahrzeug bereits bekannt ist, dass es sich um einen für das Auslösen der Funktion der Kraftfahrzeugkomponente authentifizierten ID-Geber handelt. Zum anderen kann mit abstandsabhängiger Einschaltung der Radareinheit gewährleistet werden, dass für eine gegebene Fahrzeug- und Bedienszenario-Konstellation ein vorteilhafter Trade-Off aus Verfügbarkeit von Daten für Positionsinformationen einerseits und Auslösung von Radarsende- und Empfangsvorgängen andererseits erreicht werden kann; so kann beispielsweise je nach Bedienkonstellation empirisch ein Auslösen der Radarvorgänge daran angepasst werden, wie häufig in entsprechenden Versuchsbeispielen ein nicht erfolgreiches Erhalten von Funksignalen für die Positionsinformationsermittlung, beispielsweise aufgrund der oben beschriebenen Effekte einer Abschattung von UWB-Funksignalen, auftritt. Diese empirischen Beobachtungen können in Abwägung gebracht werden mit der Menge an Radarinformationen, die erhalten werden, ohne dass sie aufgrund erfolgreicher Gewinnung von Positionsinformationen basierend auf einer UWB-Kommunikation zwingend erforderlich wären.

Gemäß einer alternativen Überlegung kann ein Steuersystem zum Auslösen einer Funktion einer Fahrzeugkomponente eines Kraftfahrzeugs vorgesehen sein, das ein Ortungssystem zum Orten eines Bedieners, der einen ID-Geber mit sich führt aufweist.

Das Ortungssystem weist wenigstens eine Funkverbindungs- und Radareinheit, bevorzugt mehrere Funkverbindungs- und Radareinheiten auf. Gegenüber der eingangs beschriebenen Entwicklung unterscheidet sich die nun beschriebene Entwicklung dahingehend, dass die Funkverbindungs- und Radareinheit als eine Einheit vorhanden ist, die sowohl zum Aussenden und Empfangen von Funksignalen als auch zum Aussenden und Empfangen von Radarsignalen geeignet ist.

Die Funkverbindungs- und Radareinheiten sind mit einer zentralen Steuereinheit verbunden, welche eingerichtet ist,
aus Signalinformationen von Funksignalen, welche die Funkverbindungs- und Radareinheiten von dem ID-Geber empfangen, erste Positionsinformationen herzuleiten, und
aus Radarantworten, welche eine oder mehrere oder alle der Funkverbindungs- und Radareinheiten empfangen, zweite Positionsinformationen herzuleiten.

Die Funkverbindungs- und Radareinheiten können beispielsweise als UWB-Funkverbindungs- und Radareinheiten ausgebildet sein, die mit einer UWB-Ranging-Funktionalität sowie mit einer UWB-Radar-Funktionalität ausgestattet sind.

Alternativ können die Funkverbindungs- und Radareinheiten als Bluetooth-Funkverbindungs- und Radareinheiten ausgebildet sein, insbesondere als Bluetooth-Funkverbindungs- und Radareinheiten mit einer BLE-Funktionalität, die mit einer Bluetooth-Ranging-Funktionalität sowie mit einer Bluetooth-Radar-Funktionalität ausgestattet sind.

Die Steuereinheit kann eingerichtet sein, das Herleiten der ersten Positionsinformationen zumindest als Signallaufzeit-basiertes Erfassen einer Abstandsinformation mit Laufzeitinformationen von Funksignalen durchzuführen, die für jede der Funkverbindungs- und Radareinheiten zwischen der Funkverbindungs- und Radareinheit und dem ID-Geber gesendet werden. Alternativ kann bei Betrieb wenigstens dreier solcher Funkverbindungs- und Radareinheiten eine Trilateration für das Herleiten der ersten Positionsinformationen gewonnen werden.

Das Steuersystem kann eingerichtet sein, indem die Steuereinheit konfiguriert ist, das Herleiten der zweiten Positionsinformationen zumindest als Signallaufzeit-basiertes Erfassen einer Abstandsinformation mit Laufzeitinformationen von Radarsignalen durchzuführen, alternativ bei wenigstens Betrieb wenigstens dreier solcher Funkverbindungs- und Radareinheiten mittels Trilateration für das Herleiten der zweiten Positionsinformationen.

Die Funkverbindungs- und Radareinheiten können als UWB-Funkverbindungs- und Radareinheiten ausgebildet sein, die einen schaltbar zu wechselnden Funkverbindungsmodus und einen Radarmodus aufweisen. Es kann also vorgesehen sein, dass eine Funkverbindungs- und Radareinheit genutzt wird, bei denen zu einem gegebenen Zeitpunkt nur einer der Betriebsmodi "Funk" und "Radar" möglich ist, wobei beide Betriebsmodi von einem selben UWB-Frontend betrieben werden und regelmäßig softwaregesteuert zwischen den beiden Modi gewechselt wird. Solche UWB-Funkverbindungs- und Radareinheiten sind aus der Praxis bekannt.

Die Funkverbindungs- und Radareinheiten können auch als UWB-Funkverbindungs- und Radareinheiten ausgebildet sein, die zur parallelen Funk- und Radarsignalverarbeitung einer Ranging-Antwort sowie einer Radarantwort desselben UWB-Signals ausgebildet sind. Auch solche UWB-Funkverbindungs- und Radareinheiten sind aus der Praxis bekannt.

Die nachfolgend beschriebenen Weiterbildungen beziehen sich auf alle zuvor beschriebenen Überlegungen, unabhängig von der betrachteten Alternative, sowie auch für jede der beschriebenen Weiterbildungen.Bevorzugt ist, dass die zentrale Steuereinheit eingerichtet ist, anhand der zweiten Positionsinformationen eine Plausibilisierung der ersten Positionsinformationen vorzunehmen. Das bedeutet, dass zunächst eine primäre Positionsinformation anhand von Funksignalen hergeleitet wird. Erst dann, wenn diese primäre Positionsinformation erhalten worden ist, wird eine Radarantwort oder Menge von Radarantworten verwendet, um zu plausibilisieren, ob die mit Funksignalen ermittelte erste Positionsinformation plausibel ist. Es wird also beispielsweise anhand einer Ermittlung von Informationen aus den Radarantworten abgeprüft, ob das mit den Radarantworten erhaltene Ergebnis auch anhand der Auswertung der Funksignale hätte erhalten worden sein können.

Daraufhin kann vorgesehen sein, dass die ersten Positionsinformationen nur unter der Voraussetzung als valide Positionsinformationen bewertet werden, wenn die Plausibilisierung der ersten Positionsinformationen erfolgreich gewesen ist. Das Vorliegen von validen ersten Positionsinformationen wiederum kann in einer Weiterbildung als zu erfüllende Bedingung für das Auslösen einer Funktion vorausgesetzt werden. Das bedeutet, das in einer Ausführungsform vorgesehen sein kann, dass die Steuereinheit eingerichtet ist, eine Auslösung einer Funktion der Fahrzeugkomponente nur unter der notwendigen - optional zusätzlich auch hinreichenden - Voraussetzung zuzulassen beziehungsweise freizuschalten, dass valide erste Positionsinformationen vorliegen.

Beispielsweise kann das Plausibilisieren der ersten Positionsinformationen anhand der zweiten Positionsinformationen erfolgen, indem als erste Positionsinformation oder als Teil der ersten Positionsinformationen eine erste Abstandsinformation hergeleitet wird, und sodann anhand einer als zweite Positionsinformation oder als Teil der zweiten Positionsinformationen hergeleiteter Abstandsinformation geprüft wird, ob die erste Positionsinformation und die zweite Positionsinformation als von einer derselben Person stammend angesehen werden. Die Plausibilisierung kann beispielsweise eine Bestimmung einer Abstandsdifferenz aus der ersten Abstandsinformation und der zweiten Abstandsinformation umfassen, wobei die Plausibilisierung nur dann als erfolgreich durchgeführt angesehen wird, bevorzugt genau dann als erfolgreich validierend angesehen wird, wenn die Abstandsdifferenz kleiner ist als ein vorgegebener maximaler Differenzwert. Der Begriff der Abstandsinformation bezeichnet allgemein einen Wert, der eine Korrelation mit dem Abstand aufweist, beispielsweise kann es sich bei der Abstandsinformation um einen Abstandsskalar handeln, es kann sich aber auch beispielsweise um eine Signalstärke, eine Laufzeit oder eine ähnliche Information handeln. Beispielsweise kann es sich bei den ersten Abstandsinformationen um eine UWB-Signallaufzeit handeln und bei der zweiten Abstandsinformation um eine Radarsignallaufzeit handeln, wobei beide Laufzeiten mit einer UWB-Funkanordnung beziehungsweise einer Radareinheit eines selben Detektionspaars ermittelt worden sind, und wobei die Plausibilisierung der UWB-Laufzeit nur dann als erfolgreich angenommen wird, wenn die Differenz zwischen der UWB-Laufzeit und der Radarsignallaufzeit eine als vorgegebene Laufzeitdifferenz ausgebildete Abstandsdifferenz nicht überschreitet.

Es kann auch vorgesehen sein, dass die ersten Positionsinformationen ein mittels Trilateration eines von mit drei UWB-Funkanordnungen erhaltenen UWB-Funksignals ermittelter erster Positionsvektor (mit drei Komponenten: x-, y-, z-Komponente) ist, und dass die zweite Positionsinformation ein mittels Trilateration ermittelter Radarlaufzeiten von einem UWB-Radarsignal, erhalten an drei Radareinheiten, bestimmter zweiter Positionsvektor ist, und dass die Abstandsdifferenz die skalare Länge des Differenzvektors ist, der als Differenz des ersten Positionsvektors und des zweiten Positionsvektors gebildet wird. In diesem speziellen Beispiel kann dann die Plausibilisierung beispielsweise genau dann als erfolgreich angesehen werden, wenn der skalare Abstand kleiner ist als ein vorgegebener maximaler skalarer Differenzwert.

Prinzipiell ist eine Vielzahl möglicher Ausführungsformen denkbar. Bei aller Vielfalt in der möglichen Ausführung ist wesentlich, dass erste Daten, die mit den Funkverbindungseinheiten gewonnen werden, und mit der Position des Kommunikationspartners wie beispielsweise einem ID-Geber in Korrelation stehen, verglichen werden mit zweiten Daten, die mit den Radareinheiten gewonnen werden, und der Vergleich eine Prüfung darauf umfasst, ob die ersten Daten und die zweiten Daten von einem an einer einzigen Position befindlichen Bedieners verursacht worden sein können. Der oben erwähnte festgelegte Abstandsgrenzwert reflektiert bei diesem Vergleich die in Kauf genommene Ungenauigkeit der beiden Verfahren zueinander und ist beispielsweise empirisch festzulegen.

Beispielsweise kann der vorgegebene maximale Differenzwert ein skalarer Abstandswert sein, der bevorzugt kleiner ist als 50 cm. Alternativ kann der vorgegebene maximale Differenzwert eine prozentuale Abweichung der Abstandsinformation voneinander sein, die bevorzugt kleiner ist als 20 Prozent des größeren der beiden Werte, wobei die beiden Werte skalare erste Abstandsinformationen und skalare zweite Abstandsinformationen sind.

Besonders bevorzugt ist die zentrale Steuereinheit eingerichtet, anhand von Bewegungssensordaten eine Plausibilisierung der ersten Positionsinformationen vorzunehmen, oder eine Plausibilisierung der zweiten Positionsinformationen vorzunehmen, oder eine Plausibilisierung sowohl der ersten als auch der zweiten Positionsinformationen vorzunehmen. Das bedeutet, dass insbesondere vorgesehen sein kann, dass die ersten Positionsinformationen und/oder die zweiten Positionsinformationen nur unter der Voraussetzung als valide Positionsinformationen bewertet werden, wenn die Plausibilisierung der ersten Positionsinformationen und/oder der zweiten Positionsinformationen anhand von Bewegungssensordaten erfolgreich gewesen ist.

Wenn die zentrale Steuereinheit eingerichtet ist, eine Plausibilisierung der ersten Positionsinformationen und der zweiten Positionsinformationen anhand von Bewegungssensordaten vorzunehmen, dann sind hierfür Bewegungssensordaten erforderlich. In Zusammenwirkung mit einem geeigneten ID-Geber, der in dem Fachmann aus der Praxis bekannter Weise einen Bewegungssensor aufweist, und mit der dahingehenden Einrichtung des Steuersystems, über eine oder mehrere der Funkverbindungseinheiten mit diesem ID-Geber eine Funkkommunikation durchzuführen, kann der ID-Geber dem Steuersystem beziehungsweise der zentralen Steuereinheit des Steuersystems unter gewissen Bedingungen, beispielsweise auf Erhalt eines durch die zentrale Steuereinheit ausgesandten Anfragesignals hin, Bewegungssensordaten zusenden, welche die Steuereinheit sodann für die entsprechende Plausibilisierung nutzen kann. Beispielsweise können erste Positionsinformationen und/oder zweite Positionsinformationen, die ein Feststellen beinhalten, dass ein Bediener sich unmittelbar vor einer bestimmten Tür des Kraftfahrzeugs, beispielsweise der Fahrertür des Kraftfahrzeugs, befindet, in einem Beispiel nur unter der Voraussetzung als valide Positionsinformationen bewertet werden, dass die Bewegungssensordaten ergeben, dass innerhalb eines festgelegten Zeitraums, der die Bewegungssensordaten abdeckt, und der beispielsweise wenigstens 250 Millisekunden betragen kann, eine Geschwindigkeit des ID-Gebers zeitweise oder während des gesamten festgelegten Zeitraums kleiner als ein Geschwindigkeitsgrenzwert gewesen ist und/oder eine Beschleunigung des ID-Gebers zeitweise oder während des gesamten festgelegten Zeitraums kleiner als ein Beschleunigungsgrenzwert gewesen ist.

Die Plausibilisierung kann dabei auf verschiedenste Weise erfolgen und bedarf einer empirischen Einstellung; wesentlich ist die grundlegende Idee, dass mit Sensordaten, die eine Bewegung des ID-Gebers selbst anzeigen, plausibilisiert wird, ob eine erste Positionsinformation und/oder eine zweite Positionsinformation valide ist. Insbesondere kann erreicht werden, dass ein Zeitpunkt des Auslösens einer Funktion oder auch die Freigabe des Auslösens der Funktion in verbesserter Weise beschränkt wird auf Situationen, in denen das Auslösen der Funktion tatsächlich gefordert ist oder sinnvoll ist. Beispielsweise kann das Auslösen der Funktion des Motorstarts beschränkt werden auf Zeiträume, in denen der Bewegungssensor des ID-Gebers keine oder keine über ein gewisses Maß hinausgehende Bewegung anzeigt, wobei das vorgenannte gewisse Maß wie bereits erwähnt auf empirische Weise zu ermitteln ist und unter Betrachtung verschiedener Parameter bestimmt werden kann, beispielsweise der Toleranz für Fehlauslösungen (false positives) oder für unerwünschte Nichtauslösungen (false negatives) der Funktion.

Ganz allgemein gesprochen ist die zentrale Steuereinheit bevorzugt eingestellt, vor Auslösen der Funktion der Fahrzeugkomponente die ersten Positionsinformationen mit einem Sollparameterraum zu vergleichen, und die Auslösung der Funktion nur dann freizuschalten, wenn sowohl die ersten Positionsinformationen innerhalb des Sollparameterraums liegen als auch die ersten Positionsinformationen als valide Positionsinformationen bewertet sind. Das bedeutet beispielsweise, dass, wenn der Sollparameterraum ein Raum innerhalb eines Grenzabstands des ID-Gebers vom Fahrzeug ist, zunächst anhand der ersten Positionsinformationen festgestellt werden muss, dass der ID-Geber sich innerhalb des Grenzabstands vom Fahrzeug befindet, und dass dieser Abstand, gegebenenfalls im Rahmen von tolerierten Abweichungen, auch mit den Daten validiert werden kann, die mit den Radareinheiten und - bevorzugt - zusätzlich auch mit den Bewegungssensordaten gewonnen wurden.

Ein weiterer Gedanke der Erfindung beschreibt ein Fahrzeugfunktionsfreigabesystem.

Das Fahrzeugfunktionsfreigabesystem weist ein Steuersystem der erfindungsgemäßen Weise oder einer seiner Weiterbildungen auf. Das Steuersystem kann beispielsweise an einem Fahrzeug angeordnet sein und mit einer Fahrzeugkomponente des Fahrzeugs gekoppelt sein derart, dass das Steuersystem die Funktion der Fahrzeugkomponente auslösen kann, das heißt insbesondere: freigeben oder sperren kann.

Das Fahrzeugfunktionsfreigabesystem weist zudem einen portablen ID-Geber auf, der über eine Kommunikationsanordnung verfügt. Mit der Kommunikationsanordnung ist der ID-Geber für eine Kommunikation mit den Funkverbindungseinheiten des Ortungssystems vorbereitet. Das bedeutet insbesondere, dass, wenn die Funkverbindungseinheiten als UWB-Funkanordnungen ausgebildet sind, der ID-Geber zumindest in der Lage sein muss, eine UWB-Funkkommunikation mit UWB-Funkanordnungen durchzuführen, so dass zumindest die Befähigung vorliegt, eine UWB-Laufzeitermittlung mit UWB-Ranging zwischen jeder der UWB-Funkanordnungen und dem ID-Geber vorzunehmen. Hierfür kann die Kommunikationsanordnung des ID-Gebers beispielsweise als UWB-Transceiver ausgebildet sein.

Der ID-Geber kann beispielsweise als Funkschlüssel ohne oder mit mechanischem Schlüsselbart ausgebildet sein, aber auch alternative Ausführungen eines ID-Gebers sind möglich, wie beispielsweise eine Ausführung des ID-Gebers als Smartphone oder als Smartwatch oder als Smart Ring.

Besonders bevorzugt weist der ID-Geber zusätzlich einen Bewegungssensor auf, sowie einen mit dem Bewegungssensor und der Kommunikationsanordnung gekoppelten Mikrocontroller, wobei der Mikrocontroller eingerichtet ist, auf ein Anfragesignal des Ortungssystems hin Bewegungsdaten des Bewegungssensors aufzuzeichnen und an das Ortungssystem zu senden.

Weitere Einzelheiten, Merkmale und Vorteile des erfindungsgemäßen Steuersystems und des erfindungsgemäßen Fahrzeugfunktionsfreigabesystems ergeben sich aus der nachfolgenden Beschreibung im Zusammenhang mit der Figur, in der beispielhaft ein Ausführungsbeispiel der Erfindung dargestellt ist.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind.

Es zeigt:

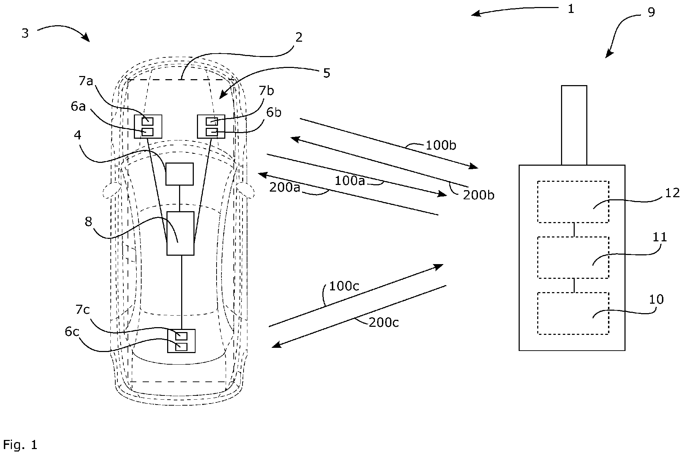

Fig. 1: ein Ausführungsbeispiel eines erfindungsgemäßen Fahrzeugfunktionsfreigabesystems, unter anderem aufweisend ein Ausführungsbeispiel eines erfindungsgemäßen Steuersystems.

In der Fig. 1 ist ein Fahrzeugfunktionsfreigabesystem 1 dargestellt. Das Fahrzeugfunktionsfreigabesystem 1 verfügt über ein Steuersystem 2. Das Steuersystem 2 ist an einem Fahrzeug 3 angeordnet, und an diesem mit einer als Motorstarter ausgebildeten Fahrzeugkomponente 4 gekoppelt. Das Steuersystem 2 dient dazu, die Funktionalität des Motorstartes auszulösen, das heißt insbesondere: freizugeben und/oder zu sperren.

Das Steuersystem 2 umfasst ein Ortungssystem 5, welches drei Funkverbindungseinheiten 6a, 6b, 6c aufweist, die in der dargestellten Ausführungsform als UWB-Funkanordnungen ausgebildet sind, die mit einer UWB-Ranging-Funktionalität ausgestattet sind. Das Ortungssystem 5 weist ferner drei Radareinheiten 7a, 7b, 7c auf, die als UWB-Radarsensoren ausgebildet sind, mit denen UWB-Radarsignale ausgesendet und deren Radarantworten wieder empfangen werden können. Die Funkverbindungseinheiten 6a, 6b, 6c und die Radareinheiten 7a, 7b, 7c sind mit einer zentralen Steuereinheit 8 verbunden. Jeweils eine UWB-Funkanordnung 6a, 6b, 6c und ein UWB-Radarsensor 7a, 7b, 7c sind auf einem gemeinsamen Chip angeordnet, sodass paarweise jeweils eine Funkverbindungseinheit eineindeutig einer Radareinheit zu einem Detektionspaar zugeordnet ist, was neben der örtlichen Positionierung in gleichem Maße durch entsprechende logische Zuordnung in der zentralen Steuereinheit 8 abgebildet ist.

Die zentrale Steuereinheit 8 ist unter anderem ausgebildet, Signalinformationen von Funksignalen, welche die Funkverbindungseinheiten 6a, 6b, 6c von einem ID-Geber empfangen, auszuwerten und erste Positionsinformationen aus diesen abzuleiten. Weiterhin ist die zentrale Steuereinheit 8 ausgebildet, aus Radarantworten, welche eine oder mehrere oder alle der Radareinheiten 7a, 7b, 7c empfangen, zweite Positionsinformationen herzuleiten.

Zusätzlich zu den Einrichtungen des Steuersystems 2 verfügt das Fahrzeugfunktionsfreigabesystem 1 über einen portablen ID-Geber 9, der in Zusammenwirkung mit dem am Fahrzeug eingerichteten Steuersystem 2 die Funktionalität des Fahrzeugfunktionsfreigabesystems 1 gewährleistet. Der ID-Geber 9 weist eine als UWB-Transceiver ausgebildete Kommunikationsanordnung 10 auf, um eine Kommunikation mit den Funkverbindungseinheiten 6a, 6b, 6c des Ortungssystems 5 absolvieren zu können.

Der ID-Geber 9 weist in der gezeigten Ausführungsform zudem einen Bewegungssensor 11 auf sowie einen mit dem Bewegungssensor 11 und mit der Kommunikationsanordnung 10 gekoppelten Mikrocontroller 12. Der Mikrocontroller 12 ist eingerichtet, auf ein Anfragesignal des Ortungssystems 5 hin Bewegungsdaten des Bewegungssensors 11 aufzuzeichnen und deren Versendung an das Ortungssystem 5 mittels Kommunikationsanordnung 10 zu veranlassen.

Um Positionsinformationen zu erhalten, veranlasst die zentrale Steuereinheit 8 zunächst eine UWB-Kommunikation zwischen den mit UWB-Ranging-Funktionalität ausgebildeten UWB-Funkanordnungen 6a, 6b, 6c und dem UWB-Transceiver 10 des ID-Gebers 9, wobei jeweils ein UWB-Signal 100a, 100b, 100c von dem mit UWB-Ranging-Funktionalität ausgebildeten UWB-Transceiver 10 mit einem UWB-Antwortsignal 200a, 200b, 200c erwidert wird. Die UWB-Funkanordnungen 6a, 6b, 6c und hierdurch die zentrale Steuereinheit 8 gelangen an entsprechende Laufzeitwerte, aus denen heraus sie mittels Trilateration erste Positionsinformationen herleiten können.

Ergänzende, zweite Positionsinformationen gewinnt die zentrale Steuereinheit 8 mittels den UWB-Radarsensoren. Die zentrale Steuereinheit 8 ist eingerichtet, anhand der zweiten Positionsinformationen eine Plausibilisierung der ersten Positionsinformationen vorzunehmen. Die kann beispielsweise erfolgen, indem die ersten Positionsinformationen eine erste Abstandsinformation umfassen und die zweiten Positionsinformationen eine zweite Abstandsinformation umfassen, wobei die Plausibilisierung eine Bestimmung einer Abstandsdifferenz der ersten Abstandsinformation und der zweiten Abstandsinformation umfasst, wobei die Plausibilisierung nur dann erfolgreich ist, wenn die Abstandsdifferenz kleiner ist als ein vorgegebener maximaler Differenzwert, beispielsweise kleiner als 50 cm.

Zusätzlich ist die Steuereinheit 8 eingerichtet, Bewegungssensordaten anzufragen, welche der Mikrocontroller 12 ID-Geber 9 sodann mit dem Bewegungssensor 11 erfasst und deren Versendung mit einem UWB-Signal 300 der Mikrocontroller 12 veranlasst. Die Bewegungssensordaten werden von der zentralen Steuereinheit ebenfalls zur Plausibilisierung genutzt beispielsweise kann die Freigabe des Motorstarters 4 eingeschränkt werden auf Szenarien, in denen der Bewegungssensor anzeigt, dass innerhalb einer vorgegebenen Toleranz keine Bewegung stattfindet und/oder keine Beschleunigung stattfindet.

## Patentansprüche

1. Steuersystem (2) zum Auslösen einer Funktion einer Fahrzeugkomponente (4) eines Kraftfahrzeugs (3) mit einem Ortungssystem (5) zum Orten eines Bedieners, der einen ID-Geber (9) mit sich führt, wobei
- das Ortungssystem (5) mehrere Funkverbindungseinheiten (6a, 6b, 6c) aufweist, und
- das Ortungssystem (5) eine oder mehrere Radareinheiten (7a, 7b, 7c) aufweist,
wobei die Funkverbindungseinheiten (6a, 6b, 6c) und die Radareinheiten (7a, 7b, 7c) mit einer selben zentralen Steuereinheit (8) verbunden sind, welche eingerichtet ist,
aus Signalinformationen von Funksignalen, welche die Funkverbindungseinheiten (6a, 6b, 6c) von dem ID-Geber (9) empfangen, erste Positionsinformationen herzuleiten, und
aus Radarantworten, welche eine oder mehrere oder alle der Radareinheiten (7a, 7b, 7c) empfangen, zweite Positionsinformationen herzuleiten.

2. Steuersystem (2) nach Anspruch 1, wobei
die Funkverbindungseinheiten (6a, 6b, 6c) als UWB-Funkanordnungen ausgebildet sind, die mit einer UWB-Ranging-Funktionalität ausgestattet sind, oder
die Funkverbindungseinheiten (6a, 6b, 6c) als Bluetooth-Funkanordnungen ausgebildet sind, insbesondere als Bluetooth-Funkanordnungen mit einer BLE-Funktionalität.

3. Steuersystem (2) nach Anspruch 2,
wobei das Ortungssystem (5) wenigstens eine Bluetooth-Funkanordnung aufweist, und die Steuereinheit (8) eingerichtet ist, das Herleiten der ersten Positionsinformationen zumindest als Signallaufzeit-basiertes Erfassen einer Abstandsinformation mit Laufzeitinformationen von Bluetooth-Funksignalen durchzuführen, die für jede der Bluetooth-Funkanordnungen zwischen der Bluetooth-Funkanordnung und dem ID-Geber (9) gesendet werden, oder
- wobei das Ortungssystem (5) wenigstens drei Bluetooth-Funkanordnungen aufweist, und wobei die Steuereinheit (8) eingerichtet ist, das Herleiten der ersten Positionsinformationen mittels Trilateration und/oder Triangulation mit Laufzeitinformationen von Bluetooth-Funksignalen durchzuführen, die für jede der Bluetooth-Funkanordnungen zwischen der Bluetooth-Funkanordnung und dem ID-Geber (9) gesendet werden, oder
- wobei das Ortungssystem (5) wenigstens eine UWB-Funkanordnung aufweist, und die Steuereinheit (8) eingerichtet ist, das Herleiten der ersten Positionsinformationen zumindest als Signallaufzeit-basiertes Erfassen einer Abstandsinformation mit Laufzeitinformationen von UWB-Funksignalen durchzuführen, die für jede der UWB-Funkanordnungen zwischen der UWB-Funkanordnung und dem ID-Geber (9) gesendet werden, oder
- wobei das Ortungssystem (5) wenigstens drei UWB-Funkanordnungen aufweist, und wobei die Steuereinheit (8) eingerichtet ist, das Herleiten der ersten Positionsinformationen mittels Trilateration und/oder Triangulation mit Laufzeitinformationen von UWB-Funksignalen durchzuführen, die für jede der UWB-Funkanordnungen zwischen der UWB-Funkanordnung und dem ID-Geber (9) gesendet werden.

4. Steuersystem (2) nach einem der vorhergehenden Ansprüche, wobei die Radareinheiten (7a, 7b, 7c) als UWB-Radarsensoren ausgebildet sind, die zum Senden von UWB-Radarsignalen und zum Empfangen der Radarantworten, welche von den UWB-Radarsignalen herbeigeführt werden, ausgebildet sind.

5. Steuersystem (2) nach einem der vorhergehenden Ansprüche,
- wobei das Ortungssystem (5) wenigstens eine Radareinheit (7a, 7b, 7c) aufweist, und die Steuereinheit (8) eingerichtet ist, das Herleiten der zweiten Positionsinformationen zumindest als Signallaufzeit-basiertes Erfassen einer Abstandsinformation mit der Radareinheit durchzuführen, oder
- wobei das Ortungssystem (5) wenigstens drei Radareinheiten (7a, 7b, 7c) aufweist, und wobei bevorzugt die Steuereinheit (8) eingerichtet ist, das Herleiten der zweiten Positionsinformationen mittels Trilateration und/oder Triangulation mit Radarantworten, insbesondere mit Laufzeitinformationen der Radarantworten, durchzuführen, die für jede der Radareinheiten (7a, 7b, 7c) erhalten werden.

6. Steuersystem (2) nach einem der vorhergehenden Ansprüche, wobei
die Funkverbindungseinheiten (6a, 6b, 6c) als UWB-Funkanordnungen ausgebildet sind, die mit einer UWB-Ranging-Funktionalität ausgestattet sind,
und die Radareinheiten (7a, 7b, 7c) als UWB-Radarsensoren ausgebildet sind, die zum Senden von UWB-Radarsignalen und zum Empfangen der Radarantworten ausgebildet sind,
wobei jeweils eine UWB-Funkanordnung und ein UWB-Radarsensor (7a, 7b, 7c) auf einem gemeinsamen Chip angeordnet sind.

7. Steuersystem (2) nach einem der vorhergehenden Ansprüche, **dadurch gekennzeichnet, dass** paarweise jeweils eine Funkverbindungseinheit (6a, 6b, 6c) eineindeutig einer Radareinheit (7a, 7b, 7c) zu einem Detektionspaar zugeordnet ist, wobei
die zentrale Steuereinheit (8) eingerichtet ist, die Radareinheit (7a, 7b, 7c) eines Detektionspaars für das Senden von Radarsignalen und das Empfangen einer Radarantwort einzuschalten, nachdem ein mit der Funkverbindungseinheit (6a, 6b, 6c) desselben Detektionspaars gewonnener Abstandswert einen festgelegten Abstandsgrenzwert unterschritten hat, oder
eine mit der Radareinheit (7a, 7b, 7c) und der Funkverbindungseinheit (6a, 6b, 6c) desselben Detektionspaars gekoppelte Steueranordnung eingerichtet ist, die Radareinheit (7a, 7b, 7c) eines Detektionspaars für das Senden von Radarsignalen und das Empfangen einer Radarantwort einzuschalten, nachdem ein mit der Funkverbindungseinheit (6a, 6b, 6c) desselben Detektionspaars gewonnener Abstandswert einen festgelegten Abstandsgrenzwert unterschritten hat.

8. Steuersystem (2) zum Auslösen einer Funktion einer Fahrzeugkomponente (4) eines Kraftfahrzeugs (3) mit einem Ortungssystem (5) zum Orten eines Bedieners, der einen ID-Geber (9) mit sich führt, wobei
- das Ortungssystem (5) wenigstens eine Funkverbindungs- und Radareinheit, bevorzugt mehrere Funkverbindungs- und Radareinheiten (6a, 6b, 6c), aufweist,
wobei die Funkverbindungs- und Radareinheiten (6a, 6b, 6c) mit einer zentralen Steuereinheit (8) verbunden sind, welche eingerichtet ist,
aus Signalinformationen von Funksignalen, welche die Funkverbindungs- und Radareinheiten (6a, 6b, 6c) von dem ID-Geber (9) empfangen, erste Positionsinformationen herzuleiten, und
aus Radarantworten, welche eine oder mehrere oder alle der Funkverbindungs- und Radareinheiten (7a, 7b, 7c) empfangen, zweite Positionsinformationen herzuleiten.

9. Steuersystem (2) nach Anspruch 8, wobei
die Funkverbindungs- und Radareinheiten (6a, 6b, 6c) als UWB-Funkverbindungs- und Radareinheiten ausgebildet sind, die mit einer UWB-Ranging-Funktionalität sowie mit einer UWB-Radar-Funktionalität ausgestattet sind, oder
die Funkverbindungs- und Radareinheiten (6a, 6b, 6c) als Bluetooth-Funkverbindungs- und Radareinheiten ausgebildet sind, insbesondere als Bluetooth-Funkverbindungs- und Radareinheiten mit einer BLE-Funktionalität, die mit einer Bluetooth-Ranging-Funktionalität sowie mit einer Bluetooth-Radar-Funktionalität ausgestattet sind.

10. Steuersystem (2) nach Anspruch 9,
wobei die Steuereinheit (8) eingerichtet ist, das Herleiten der ersten Positionsinformationen zumindest als Signallaufzeit-basiertes Erfassen einer Abstandsinformation mit Laufzeitinformationen von Funksignalen durchzuführen, die für jede der Funkverbindungs- und Radareinheiten zwischen der Funkverbindungs- und Radareinheit und dem ID-Geber (9) gesendet werden, oder
- wobei das Ortungssystem (5) wenigstens drei Funkverbindungs- und Radareinheiten aufweist, und wobei die Steuereinheit (8) eingerichtet ist, das Herleiten der ersten Positionsinformationen mittels Trilateration und/oder Triangulation mit Laufzeitinformationen von Funksignalen durchzuführen, die für jede der Funkverbindungs- und Radareinheiten zwischen der Funkverbindungs- und Radareinheit und dem ID-Geber (9) gesendet werden.

11. Steuersystem (2) nach einem der Ansprüche 8 bis 10,
- wobei die Steuereinheit (8) eingerichtet ist, das Herleiten der zweiten Positionsinformationen zumindest als Signallaufzeit-basiertes Erfassen einer Abstandsinformation mit Laufzeitinformationen von Radarsignalen durchzuführen, oder
- wobei das Ortungssystem (5) wenigstens drei Funkverbindungs- und Radareinheiten (7a, 7b, 7c) aufweist, und wobei bevorzugt die Steuereinheit (8) eingerichtet ist, das Herleiten der zweiten Positionsinformationen mittels Trilateration und/oder Triangulation mit Radarantworten, insbesondere mit Laufzeitinformationen der Radarantworten, durchzuführen, die für jede der Funkverbindungs- und Radareinheiten (7a, 7b, 7c) erhalten werden.

12. Steuersystem (2) nach einem der Ansprüche 8 bis 11, wobei
die Funkverbindungs- und Radareinheiten (6a, 6b, 6c) als UWB-Funkverbindungs- und Radareinheiten ausgebildet sind, die einen schaltbar zu wechselnden Funkverbindungsmodus und einen Radarmodus aufweisen, oder
die Funkverbindungs- und Radareinheiten (6a, 6b, 6c) als UWB-Funkverbindungs- und Radareinheiten ausgebildet sind, die zur parallelen Funk- und Radarsignalverarbeitung einer Ranging-Antwort sowie einer Radarantwort desselben UWB-Signals ausgebildet sind.

13. Steuersystem (2) nach einem der vorhergehenden Ansprüche, wobei die zentrale Steuereinheit (8) eingerichtet ist,
anhand der zweiten Positionsinformationen eine Plausibilisierung der ersten Positionsinformationen vorzunehmen.

14. Steuersystem (2) nach einem der vorhergehenden Ansprüche, wobei die zentrale Steuereinheit (8) eingerichtet ist,
die ersten Positionsinformationen nur unter der Voraussetzung als valide Positionsinformationen zu bewerten, wenn die Plausibilisierung der ersten Positionsinformationen erfolgreich gewesen ist.

15. Steuersystem (2) nach Anspruch 13 oder nach Anspruch 14, wobei die ersten Positionsinformationen eine erste Abstandsinformation umfassen und die zweiten Positionsinformationen eine zweite Abstandsinformation umfassen, wobei die Plausibilisierung eine Bestimmung einer Abstandsdifferenz der ersten Abstandsinformation und der zweiten Abstandsinformation umfasst, wobei die Plausibilisierung nur dann erfolgreich ist, bevorzugt: genau dann erfolgreich ist, wenn die Abstandsdifferenz kleiner ist als ein vorgegebener maximaler Differenzwert.

16. Steuersystem (2) nach Anspruch 15, wobei
der vorgegebene maximale Differenzwert ein festgelegter Abstand ist, der bevorzugt kleiner als 50 cm ist, oder
der vorgegebene maximale Differenzwert eine prozentuale Abweichung der Abstandsinformationen voneinander ist, die bevorzugt kleiner ist als 20 Prozent des größeren der beiden Werte erste Abstandsinformation und zweite Abstandsinformation.

17. Steuersystem (2) nach einem der vorhergehenden Ansprüche, wobei die zentrale Steuereinheit (8) eingerichtet ist, anhand von Bewegungssensordaten eine Plausibilisierung der ersten Positionsinformationen vorzunehmen und/oder eine Plausibilisierung der zweiten Positionsinformationen vorzunehmen.

18. Steuersystem (2) nach Anspruch 17, wobei die zentrale Steuereinheit (8) eingerichtet ist,
die ersten Positionsinformationen und/oder die zweiten Positionsinformationen nur unter der Voraussetzung als valide Positionsinformationen zu bewerten, wenn die Plausibilisierung der ersten Positionsinformationen und/oder der zweiten Positionsinformationen erfolgreich gewesen ist.

19. Steuersystem (2) nach einem der Ansprüche 14 bis 18, wobei die zentrale Steuereinheit (8) eingerichtet ist, vor Auslösung der Funktion der Fahrzeugkomponente (4) die ersten Positionsinformationen mit einem Sollparameterraum zu vergleichen, und die Auslösung nur dann freizuschalten,
wenn
sowohl die ersten Positionsinformationen innerhalb des Sollparameterraums liegen,
als auch die ersten Positionsinformationen als valide Positionsinformationen bewertet sind.

20. Fahrzeugfunktionsfreigabesystem (1), aufweisend zumindest
ein Steuersystem (2) nach einem der vorhergehenden Ansprüche, sowie
einen portablen ID-Geber (9), der zumindest eine Kommunikationsanordnung (10) für eine Kommunikation mit den Funkverbindungseinheiten (6a, 6b, 6c) beziehungsweise mit den Funkverbindungs- und Radareinheiten (6a, 6b, 6c) des Ortungssystems (5) aufweist.

21. Fahrzeugfunktionsfreigabesystem (1) nach Anspruch 20, wobei der ID-Geber (9) zusätzlich einen Bewegungssensor aufweist sowie einen mit dem Bewegungssensor (11) und mit der Kommunikationsanordnung (10) gekoppelten Mikrocontroller (12), der eingerichtet ist, auf ein Anfragesignal des Ortungssystems hin Bewegungsdaten des Bewegungssensors aufzuzeichnen und an das Ortungssystem (5) zu senden.
